Europäisches Patentamt

European Patent Office

Office européen des brevets

(19)

(11) Numéro de publication: **0 382 611**

**A1**

# (12) DEMANDE DE BREVET EUROPEEN

(21) Numéro de dépôt: **90400288.8**

(22) Date de dépôt: **02.02.90**

(51) Int. Cl.⁵: **B01D 53/04, B01D 53/26**

(30) Priorité: **06.02.89 FR 8901468**

(43) Date de publication de la demande:
**16.08.90 Bulletin 90/33**

(84) Etats contractants désignés:
**AT BE CH DE DK ES FR GB GR IT LI LU NL SE**

(71) Demandeur: **Trepaud, Pierre**
**17, rue Legendre**
**F-75 017 Paris(FR)**

(72) Inventeur: **Trepaud, Pierre**
**17, rue Legendre**
**F-75 017 Paris(FR)**

(74) Mandataire: **Bourgognon, Jean-Marie et al**
**Cabinet Flechner 22, Avenue de Friedland**
**F-75008 Paris(FR)**

(54) **Procédé de régénération d'un adsorbeur d'une installation de dessiccation d'un gaz et installation permettant de le mettre en oeuvre.**

(57) L'installation comprend un adsorbeur (13), un éjecteur (29) ayant un ajutage d'aspiration (31) muni d'une vanne d'arrêt (32) et une sonde de température (34) détectant la température à la sortie d'un échangeur de chaleur (35) et commandant la fermeture de la vanne (32) en fonction de cette température. Dessiccation de l'air comprimé.

FIG-1

EP 0 382 611 A1

La présente invention se rapporte aux procédés de régénération des adsorbeurs d'une installation de dessiccation d'un gaz, notamment de l'air comprimé, ainsi qu'aux installations permettant de le mettre en oeuvre.

Pour régénérer un adsorbeur d'une installation de dessiccation d'un gaz, il est connu d'y faire passer du gaz humide et chaud, par exemple à une température de 130°C, jusqu'à désorption, puis de refroidir l'adsorbeur par du gaz sec et froid, par exemple à une température de 30°C.

C'est ainsi qu'au GB-2 203 965, on prévoit de faire suivre l'opération de passage du gaz humide et chaud d'un passage de gaz sec, comme l'indique nettement la ligne 12 de la page 11 où on précise que la régénération se poursuit en utilisant un procédé de variation de pression. Ce document ne prévoit pas que l'on revienne ensuite à une régénération par du gaz humide et chaud. Il en va de même au DE-A- 2 120 183 où l'on précise à la fin de la page 2 que l'un des adsorbeurs doit être refroidi pendant la période de charge de l'autre adsorbeur, tandis qu'à la page 3 on précise que le refroidissement s'effectue à l'aide du gaz épuré et séché, sans préciser que cet apport de gaz sec et épuré s'intercale entre deux régénérations par du gaz humide et chaud.

Ce procédé en un stade de chauffage prolongé, suivi d'un stade de refroidissement prolongé, est relativement long. Il ne s'accommode pas d'une variation temporaire de la puissance calorifique du dispositif de chauffage du gaz chaud provoquant le refroidissement de celui-ci. Il ne permet pas non plus d'harmoniser la durée de régénération d'un premier adsorbeur avec la durée de fonctionnement en dessiccation d'un second adsorbeur monté en parallèle avec le premier, puisque la durée du stade de chauffage lors de la régénération est déterminée en fonction de la température du gaz chaud sans possibilité de variation, alors que la production de gaz sec et donc la durée de fonctionnement de l'adsorbeur en dessiccation peuvent être variables.

Le procédé suivant l'invention de régénération d'un adsorbeur consiste à y faire passer du gaz humide et chaud, puis du gaz sec et froid, mais à entrecouper l'opération de passage du gaz humide et chaud d'un passage de gaz sec, notamment de gaz sec et moins chaud, par exemple même de gaz sec et froid.

On aurait pu penser que ce passage intermédiaire de gaz sec et froid ou moins chaud allait refroidir l'adsorbeur que l'on cherche à réchauffer et annihiler au moins en partie l'apport calorifique antérieur à l'adsorbeur. Mais en fait, il n'en est rien, car la teneur en humidité de l'adsorbant contenu dans l'adsorbeur varie en fonction du niveau, de sorte qu'il est avantageux de déplacer les calories qui s'accumulent à l'extrémité de sortie, par laquelle les gaz sont amenés, vers l'extrémité d'entrée où le taux d'humidité est bien plus élevé. Le courant d'air froid ou moins chaud se réchauffe sur l'adsorbant chauffé à l'extrémité de sortie et transporte par convexion la chaleur qui y est accumulée vers l'extrémité d'entrée où elle est le plus nécessaire. Cette convexion est d'autant plus utile que l'adsorbant est mauvais conducteur de la chaleur. Le refroidissement intermédiaire par le passage d'un courant de gaz sec et froid se traduit simplement par une augmentation de la durée totale du cycle de régénération. Entrecouper de passages de gaz sec et froid ou moins chauds les passages de gaz humide et chaud permet d'utiliser une source de chaleur à puissance calorifique variable pour chauffer le gaz humide, puisque, si cette source vient à céder une puissance calorifique. insuffisante, on en profite pour intercaler un passage de gaz sec et froid. Il est alors possible d'utiliser comme source de puissance calorifique variable les gaz chauds sortant du compresseur de l'installation et destinés à alimenter l'adsorbeur fonctionnant en dessiccation, ce qui crée une relation entre la durée du cycle de régénération dans l'un des adsorbeurs et celle du cycle de dessiccation dans l'autre adsorbeur, avec la possibilité de les harmoniser même si elles varient.

L'invention vise également une installation de dessiccation d'un gaz, notamment d'air comprimé, qui comprend un adsorbeur ayant une entrée et une sortie, un éjecteur comportant, outre un conduit d'admission communiquant avec une source de gaz sec, de préférence avec la sortie d'un second adsorbeur monté en parallèle avec le premier et fonctionnant en adsorption alors que le premier adsorbeur est régénéré, et un ajutage d'aspiration communiquant avec une source d'air humide, de préférence avec l'atmosphère, un conduit de refoulement communiquant, en passant par le circuit pour du fluide secondaire d'un échangeur de chaleur disposé en dehors de l'adsorbeur avec la sortie de l'adsorbeur. Suivant l'invention, une source calorifique de puissance variable alimente le circuit du fluide primaire de l'échangeur de chaleur, cette source étant notamment un compresseur de gaz alimentant l'installation et communiquant notamment avec l'entrée du second adsorbeur. L'installation comprend un dispositif de détermination de la puissance calorifique reçue par le fluide secondaire dans l'échangeur de chaleur et des moyens destinés à fermer une vanne d'arrêt montée sur l'ajutage d'aspiration lorsque la puissance calorifique reçue par le fluide secon daire dans l'échangeur de chaleur devient inférieur à un seuil donné.

Le passage du stade de chauffage du cycle de régénération à un stade intermédiaire de passage de gaz sec s'effectue automatiquement et simplement par la fermeture de la vanne d'arrêt lorsque le seuil donné est franchi. L'adsorbeur ne reçoit plus un mélange du gaz sec et du gaz humide provenant de l'ajutage d'aspiration, mais simplement le gaz sec en un débit moindre qu'auparavant, mais encore suffisant pour régénérer l'adsorbeur, tant en raison de la température du gaz qui reste assez élevé que de sa faible teneur en humidité.

Le dispositif de détermination de la puissance calorifique peut être une sonde de repérage de la température du fluide secondaire monté en aval de l'échangeur de chaleur. Ce peut être aussi un débitmètre monté sur le circuit pour le fluide primaire de l'échangeur de chaleur.

Suivant une variante, permettant tout particulièrement la mise en oeuvre du procédé suivant l'invention, il est prévu une minuterie définissant la période de chauffe et des moyens modifiant le réglage de cette minuterie pendant la durée où la puissance calorifique reçue par le fluide secondaire est inférieure au seuil fixé, de façon à accroître la durée de la période de chauffe, pour tenir compte de ce transfert réduit de chaleur. On obtient ainsi l'effet de convexion mentionné précédemment dans l'absorbeur en régénération et grâce à la minuterie, la durée de la période de régénération est harmonisée avec le fonctionnement du compresseur.

Suivant une variante, le dispositif de détermination de la puissance calorique comporte un premier élément déterminant un premier seuil de la puissance calorique reçue par le fluide secondaire, par exemple un débitmètre monté comme indiqué ci-dessus et un second élément déterminant un second seuil inférieur au premier seuil de la puissance calorique reçue par le fluide secondaire, par exemple une sonde de température telle qu'indiquée ci-dessus. Une vanne d'admission est montée sur le conduit d'admission et une minuterie définit la durée d'ouverture de la vanne d'admission, des moyens étant prévus en vue de modifier le réglage de la minuterie en fonction de la durée pendant laquelle la puissance calorique reçue par le fluide secondaire est inférieure au second seuil, mais est supérieure au premier seuil.

De préférence, les moyens modifiant le réglage de la minuterie la règlent différemment suivant que le premier ou le second seuil a été franchi.

Il est prévu un système comprenant deux électro-vannes sur l'admission d'air sec permettant de court-circuiter l'échangeur de chaleur de façon à n'admettre dans l'adsorbeur en régénération que de l'air sec et froid, après fermeture de la vanne d'aspiration quand la période de chauffe, définie par la minuterie, est terminée. Ce balayage d'air sec et froid assure le refroidissement de l'absorbeur, en transférant la chaleur contenue dans la zone de sortie vers la zone d'entrée humide.

Aux dessins annexés, donnés uniquement à titre d'exemple :

La figure 1 est un schéma d'une installation suivant l'invention, et

La Figure 2 est un graphique illustrant le procédé suivant l'invention.

L'installation suivant l'invention comprend un compresseur 1 alimenté par un conduit 2 et communiquant par un conduit 3, sur lequel est monté un débitmètre 4, avec l'entrée du circuit primaire d'un échangeur de chaleur 5. Le conduit de sortie du circuit primaire de l'échangeur 5 débouche, en passant par un dispositif de refroidissement 6 où le gaz est ramené à une température de 30°C environ dans un collecteur d'entrée 7 de l'installation sur lequel sont mon tées quatres vannes 8, 9, 10 et 11. Le collecteur d'entrée 7 débouche, lorsque la vanne 9 est ouverte et lorsque la vanne 8 est fermée, dans l'entrée 12 d'un premier adsorbeur 13 garni de produit adsorbant l'humidité. Le collecteur 7 débouche dans l'entrée 14 d'un second adsorbeur 15, quand la vanne 10 est ouverte et quand la vanne est fermée. La vanne 9 est fermée quand la vanne 10 est ouverte et inversement. Les sorties 16 et 17 des adsorbeurs 13 et 15 communiquant toutes deux avec un collecteur de sortie 18 commun, avec interposition de clapets anti-retour 19 et 20 autorisant le passage d'un gaz dans le sens des adsorbeurs 13, 15 vers le collecteur de sortie 18, mais interdisant le passage en sens opposé. Entre les sorties 16 et 17 des deux adsorbeurs 13, 15 s'étend en outre un conduit 21 muni de deux clapets anti-retour 22, 23. Le clapet anti-retour 22 interdit le passage du gaz dans le sens allant de la sortie 16 à la sortie 17. Le clapet anti-retour 23 interdit le passage du gaz dans le sens allant de la sortie 17 à la sortie 16.

Sur le collecteur de sortie 18 sont branchées deux dérivations 24, 25 munies de vannes d'admission 26, 27. La dérivation 24 débouche dans le conduit 21 entre les deux clapets anti-retour 22, 23. La dérivation 25 se poursuit en un conduit d'admission 28 d'un injecteur 29 muni d'un conduit de refoulement 30 et d'un ajutage d'aspiration 31 débouchant à l'extérieur avec interposition d'une vanne d'arrêt 32. Le conduit de refoulement 30 débouche à l'entrée du circuit pour le fluide secondaire de l'échangeur de chaleur 5. Ce circuit secondaire sort de l'échangeur de chaleur 5 par un conduit 33 qui débouche dans le conduit 21 entre le clapet anti-retour 22 et le point où débouche la dérivation 24. Sur le conduit 33 est montée une sonde 34 de repérage de la température.

Un automate 35 à minuterie est relié par un conducteur 36 au débitmètre 4, par un conducteur 37 à la vanne 26, par un conducteur 38 à la sonde de température 34, par un conducteur 39 à la vanne d'arrêt 32, par un conducteur 40 à la vanne 27 et par un conducteur 41, qui se subdivise en quatre branches aux vannes 8, 9, 10 et 11.

L'installation fonctionne de la manière suivante :

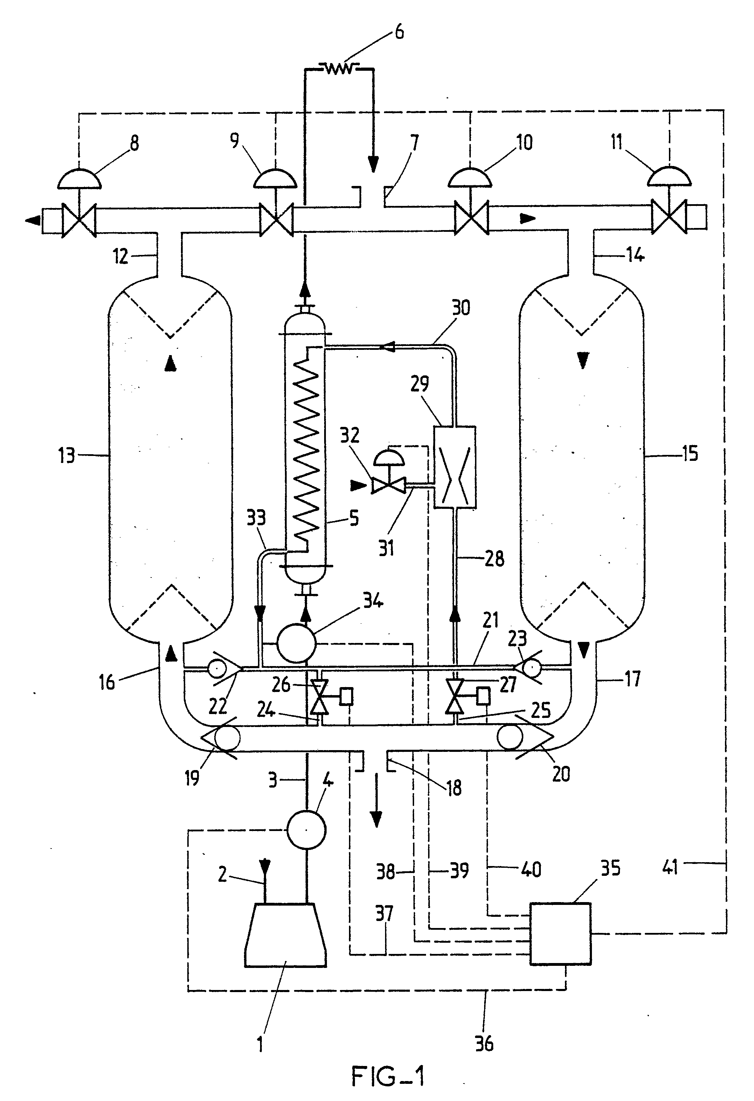

A la figure 1 l'adsorbeur 13 est en régénération et l'adsorbeur 15 fonctionne en dessiccation. Les vannes 9 et 11 sont fermées. Les vannes 8 et 10 sont ouvertes. La vanne 32 est ouverte. La vanne 27 est ouverte. La vanne 26 est fermée. Du gaz comprimé provenant du compresseur 1 parvient par le conduit 3 dans le circuit primaire de l'échangeur de chaleur 5 et y cède la chaleur au fluide du circuit secondaire. Après avoir été refroidi dans le dispositif de refroidissement 6, le gaz pénètre dans le collecteur d'entrée 7 et traverse l'adsorbeur 15. Il ressort par la sortie 17 en étant desséché et en ayant une température de 40° C environ. Il ressort de l'installation par le collecteur de sortie 18, une fraction du gaz sec, par exemple de 2 à 5 %, étant dérivée par le conduit 25 et passant dans l'éjecteur 29 où elle entraîne une certaine quantité d'air humide amené par l'ajutage d'aspiration 31. Le mélange de gaz sec et d'air humide sensiblement à la température ambiante pénètre dans l'échangeur de chaleur 5 par le conduit et y est portée à une température plus élevée, par exemple de 130° C. Ce mélange réchauffé sort par le conduit 33 et passe par le conduit 21 en traversant le clapet anti-retour 22. Il arrive ainsi à la sortie 16 de l'adsorbeur 13 et chauffe l'adsorbant se trouvant dans cet adsorbeur. Le gaz ressort par l'entrée 12 et s'échappe à l'extérieur en passant par la vanne 8 qui est ouverte.

Lorsque le débit de gaz chaud fourni par le compresseur 1 devient inférieur à un seuil donné, comme le constate le débitmètre 4, celui-ci donne l'ordre par la ligne 36 à l'automate 35, d'une part par la ligne 39 de fermer la vanne 32 et d'autre part d'augmenter la durée du cycle de chauffage de l'adsorbeur 13, c'est-à-dire d'augmenter la durée d'ouverture de la vanne 27 de la dérivation 25. En cet état, du gaz sec continue à passer dans l'éjecteur 29, mais il n'est pas mélangé à de l'air ambiant provenant de l'ajutage d'aspiration 31. Ce gaz en une quantité sensiblement inférieure à celle du mélange de gaz et d'air qui passait auparavant dans le conduit 30, est réchauffé suffisamment dans l'échangeur de chaleur 5, bien que le débit de gaz de chauffage provenant du compresseur soit moindre, pour continuer à sortir par le conduit 33 à une température de 130° C environ et à être envoyé à cette température dans l'adsorbeur 13 pour le régénérer tant par sa température que par le fait qu'il contient peu d'humidité. Comme la quantité de chaleur apportée par une unité de temps est cependant bien moindre qu'auparavant, le chauffage et donc la régénération exigeront plus de temps et c'est pourquoi l'automate 35 est programmé de manière à augmenter la durée du cycle de chauffage, c'est-à-dire la durée d'ouverture de la vanne 27. On constate que cette augmentation de durée du cycle de régénération coïncide avec une augmentation de la durée de fonctionnement en dessiccation de l'adsorbeur 15, puisqu'il y passe un débit de gaz à dessécher qui est moindre qu'auparavant.

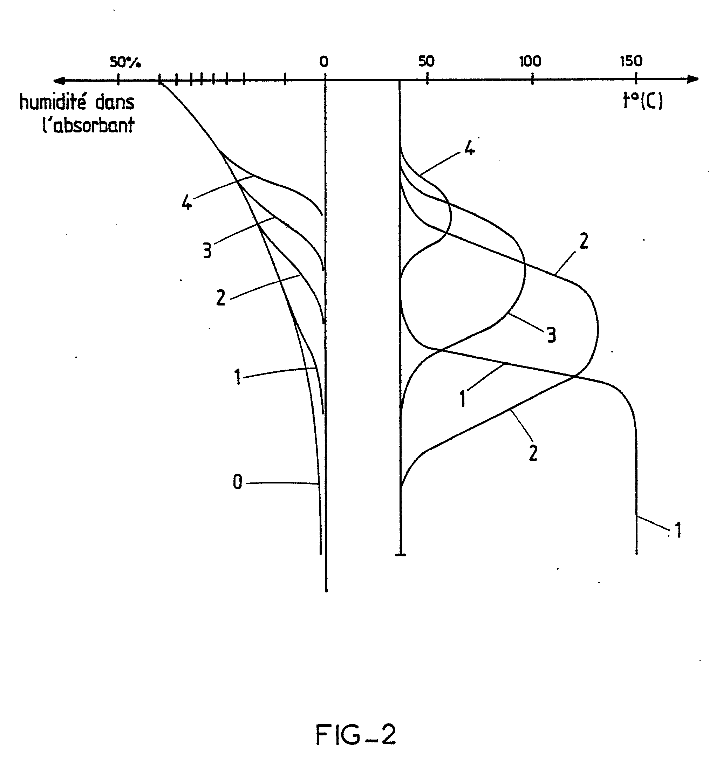

Si le débit de gaz provenant du compresseur 1 diminue encore davantage, au point que la température du gaz passant dans le conduit 33, et qui est repérée par la sonde 34, diminue au-delà de ce qui est admissible, par exemple devient inférieur à 120° C, la ligne 38 transmet cette information à l'automate 35 qui augmente en conséquence la durée du cycle de régénération. En cet état, du gaz relativement froid sort par le conduit 33 de l'échangeur de chaleur 5 et pénètre dans l'adsorbeur 13. La quantité de chaleur apportée précédemment à l'adsorbeur 13 et qui s'était accumulée dans la partie inférieure, c'est-à-dire près de la sortie 16 de l'adsorbeur, est transportée par convexion par ce courant de gaz froid vers une partie supérieure de l'adsorbeur 13, qui justement est plus humide que la partie proche de la sortie 16. Ce transport de chaleur par convexion rend la régénération de l'adsorbeur 13 plus rapide. La durée du cycle peut être diminuée. A la figure 2 on a porté en abscisses à droite les températures en °C et en abscisses à gauche le pourcentage d'humidité dans l'adsorbant. On a porté en ordonnés les niveaux dans l'adsorbant 13. La courbe 0 correspond à l'humidité dans l'adsorbant juste avant que ne commence le cycle de régénération. La courbe 1 donne la température régnant dans l'adsorbeur 13 au début de la régénération, alors qu'il a reçu déjà depuis un certain temps un mélange à 150° C et qu'il a été chauffé en conséquence. La courbe 2 correspond au transport de cette quantité de chaleur vers le haut de l'adsorbeur dû à un passage ultérieur de gaz sec et moins chaud. La chaleur a été transportée par convexion vers le haut de l'adsorbeur. Le déplacement se continue suivant la courbe 3 au fur et à mesure que le temps s'écoule pour se terminer par la courbe 4. On constate que l'apport d'une moindre quantité de chaleur, faisant suite à l'apport d'une grande quantité de chaleur conformément à la courbe 1, se traduit cependant par une diminution nette de l'humidité dans l'adsorbant.

Si la température repérée par la sonde 34 s'élève à nouveau et passe le seuil prescrit, l'automate 35 modifie le réglage de la minuterie en conséquence. Si le débit de gaz détecté par le débitmètre 4 augmente à nouveau, l'automate 35 commande en conséquence la minuterie et donc la durée d'ouverture de la vanne 27 et ouvre à nouveau la vanne 32.

En fin de cycle de chauffage, avec intercalation de passages de gaz sec et moins chaud comme décrit ci-dessus, l'automate 35 commande la fermeture de la vanne 27 et l'ouverture de la vanne 26. Du gaz froid et sec provenant de la sortie 17 de l'adsorbeur 15 passe dans la dérivation 24 dans le conduit 21 et atteint en traversant le clapet anti-retour 22 la sortie 16 de l'adsorbeur 13 pour venir refroidir cet adsorbeur 13.

Dans le présent mémoire, on entend par gaz sec un gaz dont le point de rosée est inférieur à 0° C en étant par exemple compris entre -30° C et -40° C, tandis qu'un gaz humide a un point de rosée supérieur à 0° C, par exemple compris entre 30° C et 35° C. Du gaz chaud est par exemple du gaz à une température supérieure à 120° C et du gaz moins chaud du gaz à une température inférieure à 120° C.

## Revendications

1. Procédé de régénération d'un adsorbeur qui consiste à y faire passer du gaz humide et chaud, puis du gaz sec et moins chaud, caractérisé en ce qu'il consiste à entrecouper l'opération de passage du gaz humide et chaud d'un passage de gaz sec

2. Procédé suivant la revendication 1, caractérisé en ce qu'il consiste à entrecouper l'opération de passage du gaz humide et chaud d'un passage de gaz sec et moins chaud.

3. Installation de dessiccation d'un gaz, comprenant un adsorbeur (13) ayant une entrée (12) et une sortie (16), un éjecteur (29) comportant, outre un conduit d'admission (28) communiquant avec une source de gaz sec, de préférence avec la sortie (17) d'un second adsorbeur (15) monté en parallèle avec le premier et fonctionnant en adsorption alors que le premier adsorbeur est régénéré, et un ajutage d'aspiration (31) communiquant avec une source d'air humide, de préférence avec l'atmosphère, un conduit de refoulement (30) communiquant, en passant par le circuit pour du fluide secondaire d'un échangeur de chaleur (5) disposé en dehors de l'adsorbeur (13), avec la sortie (16) de l'adsorbeur (13), caractérisée en ce qu'elle comprend :
- une source calorifique (1), de puissance variable, alimentant le circuit du fluide primaire de l'échangeur de chaleur (5),
- un dispositif (4,34) de détermination de la puissance calorifique reçue par le fluide secondaire dans l'échangeur de chaleur (5), et
- des moyens (35,39) destinés à fermer une vanne d'arrêt (32) montée sur l'ajutage d'aspiration (31), lorsque la puissance calorifique reçue par le fluide secondaire dans l'échangeur de chaleur (5) devient inférieure à un seuil donné.

4. Installation suivant la revendication 3, caractérisée en ce que la source calorifique (1) de puissance variable est un compresseur de gaz alimentant le second adsorbeur (15).

5. Installation suivant la revendication 3 ou 4, caractérisée en ce que le dispositif de détermination de la puissance calorifique est une sonde (34) de repérage de la température du fluide secondaire, montée en aval de l'échangeur de chaleur (5).

6. Installation suivant l'une des revendications 3 ou 4, caractérisée en ce que ce dispositif de détermination de la puissance calorifique est un débitmètre (4) monté sur le circuit pour le fluide primaire de l'échangeur de chaleur (5).

7. Installation suivant l'une des revendications 3 à 6, caractérisée en ce qu'elle comprend une minuterie définissant la durée d'ouverture d'une vanne d'admission (27) montée sur le conduit d'admission (28) et des moyens modifiant le réglage de la minuterie (35) en fonction de la durée pendant laquelle la puissance calorifique reçue par le fluide secondaire est inférieure au seuil donné.

8. Installation suivant la revendication 3 ou 4, caractérisée en ce que le dispositif de détermination de la puissance calorifique comporte un premier élément (4) déterminant un premier seuil de la puissance calorifique reçue par le fluide secondaire et un second élément (34) déterminant un second seuil, inférieur au premier seuil, de la puissance calorifique reçue par le fluide secondaire.

9. Installation suivant la revendication 8, caractérisée par une minuterie définissant la durée d'ouverture d'une vanne d'admission (27) montée sur le conduit d'admission (28) et des moyens modifiant différemment le réglage de la minuterie en fonction de la durée pendant laquelle la puissance calorifique reçue par le fluide, suivant que le premier ou le second seuil a été franchi.

FIG_1

EP 0 382 611 A1

FIG_2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | GB-A-2 203 965 (PALL CORP.)<br>* Figure 1; page 9, ligne 30 - page 11, ligne 28 * | 1,2 | B 01 D 53/04<br>B 01 D 53/26 |
| A | | 3,4 | |
| | --- | | |
| D,X | DE-A-2 120 183 (VEB CHEMIEANLAGENBAU ERFURT-RUDISLEBEN)<br>* Figure 1; page 2, ligne 25 - page 3, ligne 10 * | 1,2 | |
| | --- | | |
| A | EP-A-0 325 536 (P. TREPAUD)<br>* Figure 1; revendications 1-4 * | 1-9 | |
| | --- | | |
| A | DE-A-3 702 845 (THIELMANN ENERGIETECHNIK)<br>* Figure 1; revendications * | 1-9 | |
| | --- | | |
| A | EP-A-0 123 061 (ZANDER AUFBEREITUNGSTECHNIK)<br>* Figure 1 * | 1-9 | |
| | --- | | DOMAINES TECHNIQUES RECHERCHES (Int. Cl.5) |
| A | DE-A-2 354 745 (R. GRÄFF) | 1-9 | |
| | --- | | B 01 D |
| A | EP-A-0 099 591 (PALL CORP.) | 1-9 | |
| | --- | | |
| A | DE-A-2 922 616 (PINTSCH BAMAG) | 1-9 | |
| | --- | | |
| A | DE-A-3 336 427 (LINDE) | 1-9 | |
| | --- | | |
| A | GB-A- 706 045 (BRITISH OXYGEN CO.) | 1-9 | |
| | ----- | | |

Le présent rapport a été établi pour toutes les revendications

| Lieu de la recherche | Date d'achèvement de la recherche | Examinateur |
|---|---|---|
| LA HAYE | 24-04-1990 | KANOLDT W.W. |